# EUROPEAN PATENT APPLICATION

(11) **EP 0 531 783 A1**
(43) Date of publication of application: **17.03.1993**
(21) Application number: 92114344.2
(22) Date of filing: 21.08.1992
(51) Int. Cl.: C02F 1/46

(54) **Waterdraining system for an apparatus producing ion-containing water by continuous electrolysis**

(30) Priority: 30.08.1991 JP 244199/91
(71) Applicant: JANIX KABUSHIKI KAISHA, Atsugi-shi, Kanagawa (JP)
(72) Inventor: Nakayama, Takehisa, Saitama (JP); Arai, Kazuyoshi, Atsugi-shi Kanagawa (JP); Miyamae,Kazuhiro, Machida-shi Tokyo (JP); Abe, Shinji Juneparesu-Sagamihara Room, Sagamihara-shi Kanagawa (JP)
(74) Representative: Betten & Resch

(57) **Abstract**

A water draining system employable for an apparatus separately producing ion-containing waters comprising an acid water and alkaline water by employing a continuous electrolyzing process wherein the acid ion-containing water is usually used for the purpose of washing the surface of an user's body or a similar purpose and the alkaline ion-containing water is usually used as a drinking water for improving an user's health while the nature of the user's body is reformed. The water draining system includes a water supply passage (12) for supplying a water containing impurities such as a city water or the like as a raw material, an active carbon cartridge (14), a water discharge passage (18), an electrolyzing bath (18) having two electrolyzing plates (26,28) received therein, an acid water passage (40) extending downward of the upper end of the electrolyzing bath (16), an alkaline water passage (38) extending downward of the same, a drain passage (46) extending from the intermediate location of the water discharge passage (18) to reach one of the acid water passage (40) and the alkaline water passage (38), and a control unit for properly controlling opening/closing of a water supply valve (10) on the water supply passage (12) and supply electricity to the electrolyzing bath (16). Usually, a direct current is fed to the electrode plates (26, 28). To remove scales on them, a direct current having a polarity reversed is fed to them.

## Description

The present invention relates generally to a water draining system employable for an apparatus for producing an ion-containing water by employing a continuous type electrolyzing process. More particularly, the present invention relates to a water draining system employable for an apparatus for separately producing ion-containing waters comprising an acid water and an alkaline water by employing a continuous type electrolyzing process wherein after completion of water supply, the water having impurities removed therefrom is drained from an active carbon cartridge and an electrolyzing bath, and moreover, while a reverse voltage is applied to electrode plates in the electrolyzing bath so as to remove scales on them, a specific amount of water is still researved in the electrolyzing bath.

To produce an acid ion-containing water and an alkaline ion-containing water, an apparatus for producing an ion-containing water by employing an electrolyzing process has been hitherto put in practical use wherein an ion-containing water is produced by way of the steps of introducing a water containing impurities such as a city water or the like into an electrolyzing bath as a starting material via impurities removing means such as an active carbon cartridge or the like and then electrolyzing the water having the impurities removed therefrom by applying a certain voltage of a direct current to electrode plates comprising an anode and a cathode in the electrolyzing bath thereby to produce an acid ion-containing water and an alkaline ion-containing water. The product of alkaline ion-containing water is usually used as a drinking water for the purpose of improving an user's health while the acid nature of his body is reformed. On the other hand, the product of acid ion-containing water is usually used for the purpose of washing the surface of an user's body.

As the water is electrolyzed in the electrolyzing bath, plus ion based impurities such as a calcium, a magnesium and others are deposited on the electrode plate on the cathode side to form a layer of scale over the surface of the electrode plate. A quantity of deposited scale increases in proportion to a quantity of supplied water and an electricity feeding time. However, once a specific quantity of scale is deposited on the electrode, there arises a malfunction that an electrolyzing ability of the apparatus is extremely deteriorated. For this reason, when a predetermined period of time elapses, a cleaning operation should be performed so as to remove the scale from the electrode plate. To obviate the foregoing malfunction, a proposal has been already made for the apparatus wherein after completion of the electrolyzing operation, a voltage having a polarity reversed is applied to the electrode plate for a predetermined period of time to leach in the water the layer of scale deposited over the surface of the electrode plate. In such manner, since the scale deposited on the electrode plate is automatically removed therefrom by reversing the polarity of the electrode plate at every time when water supply is terminated, it becomes possible to automatically perform an electrolyzing operation without any necessity for cleaning the electrode plate.

With respect to the conventional apparatus wherein a layer of scale deposited on the electrode plate is automatically removed from the electrode having a polarity reversed by applying a certain voltage to the electrode plate, it is desirable that a specific amount of water is reserved in the electrolyzing bath while the voltage is applied to the electrode in that way, and after completion of an electrolyzing operation with the reverse voltage, the water is drained from the electrolyzing bath. If a specific amount of water remains still in the electrolyzing bath even after completion of the electrolyzing operation, it is not desirable that the product of water is used as a drinking water because the remaining water to which the reverse voltage has been applied is first drained from the electrolyzing bath when a next electrolyzing operation is started. In addition, when the remaining water is reserved in the electrolyzing bath for a long time as it is, there is a possibility that various kinds of bacilli undesirably grow in the electrolyzing bath.

Before the water is supplied into the electrolyzing bath, it flows through the active carbon cartridge. However, when the remaining water is reserved in the active carbon cartridge for a long time after completion of usage of the apparatus, various kinds of bacilli likewise undesirably grow in the active carbon cartridge. For this reason, it is not desirable to use the product of water as a drinking water.

The present invention has been made with the foregoing background in mind.

An object of the present invention is to provide a water draining system employable for an apparatus for separately producing ion-containing waters comprising an acid water and an alkaline water by employing a continuous electrolyzing process wherein a water in an active carbon cartridge and a water in an electrolyzing bath can be drained merely by closing a water supply valve on a water supply passage after completion of water supply.

Another object of the present invention is to provide a water draining system employable for an apparatus for separately producing ion-containing waters comprising an acid water and an alkaline water by employing a continuous electrolyzing process wherein a specific amount of water is certainly reserved in the electrolyzing bath during automatic removal of scales on electrode plates each having a polarity reversed in the electrolyzing bath.

According to the present invention, there is provided a water draining system employable for an apparatus for separately producing ion-containing waters comprising an acid water and an alkaline water by employing a continuous type electrolyzing process, wherein the water draining system comprises a water supply passage through which a water containing impurities such as a city water or the like flows as a raw material when the water supply valve is closed thereby to reduce the pressure in the impurity removing means; a water supply valve disposed on the water supply passage; impurity removing means for removing impurities in the supplied water, the impurities removing means having an opening portion formed at the upper end part thereof so as to allow the environmental air to be introduced into the impurity removing means through the opening portion; a water discharge passage extending downward of the impurity removing means; an electrolyzing bath having two electrode plates received therein; flow rate detecting means disposed at the intermediate location of the water discharge passage; an acid water passage extending downward of the upper end of the electrolyzing bath; an alkaline water passage extending downward of the upper end of the electrolyzing bath; a drain passage extending from the intermediate location of the water discharge passage to reach one of the acid water passage and the alkaline water passage; and a control unit for properly controlling opening/closing of the water supply valve and supply of electricity to the electrolyzing bath.

Usually, the impurity removing means is prepared in the form of an active carbon cartridge of which interior is divided into two parts by a partition wherein one of them is a part to which the water supply passage is connected at the lower end thereof and the other one is a part to which the water discharge passage is connected at the lower end thereof.

In practice, the water draining system includes a communication passage branched from the water supply passage to extend to the intermediate location of the water discharge passage. A check valve is disposed on the communication passage so as to allow the water in the impurity removing means to be drained to one of the acid water passage and the alkaline water passage not only via the water discharge passage but also via the water supply passage, the communication passage and the check valve when the water supply valve is closed, causing the pressure in the impurities removing means to be reduced in excess of a predetermined value by introducing the environmental air into the impurity removing means via the opening portion.

Usually, the flow rate detecting means is prepared in the form of a flow rate meter or a pressure switch for detecting the flowing of the water through the water discharge passage. When the flowing of the water through the water discharge passage is detected by the flow detecting means, the control unit is activated to apply a voltage to the electrode plates in the electrolyzing bath thereby to produce an acid water and an alkaline water.

The control unit controls supply of electricity such that each of the electrode plates in the electrolyzing bath receives a reverse voltage after a predetermined period of time required for descaling the electrode plates elapses after the water in the impurity removing means starts to be drained.

With such construction, when the water supply valve disposed on the water supply passage is closed by an operator, the environmental air is introduced into the impurity removing means through the opening portion formed at the upper end part thereof, causing a differential pressure to arise across a check valve on the drain passage, whereby the water is drained from the drain passage. Thus, no air directly enters the electrolyzing bath until the air in the impurity removing means enters the water discharge passage. Then, the water in the impurity removing means is first drained, and after it is substantially drained, the air in the water discharge passage reaches the electrolyzing bath. Subsequently, the water in the electrolyzing bath is drained by the action of the air. In such manner, after the water in impurity removing means is first drained, the water in the electrolyzing bath is drained. Thus, a specific amount of water can certainly be reserved in the electrolyzing bath within a predetermined period of time required for cleaning the electrode plates in the electrolyzing bath.

Other objects, features and advantages of the present invention will become apparent from reading of the following description which has been made in conjunction with the accompanying drawing.

A single accompanying drawing is a diagrammatical view of a water draining system in accordance with an embodiment of the present invention.

Now, the present invention will be described in detail hereinafter with reference to a single accompanying drawing which illustrates a preferred embodiment of the present invention.

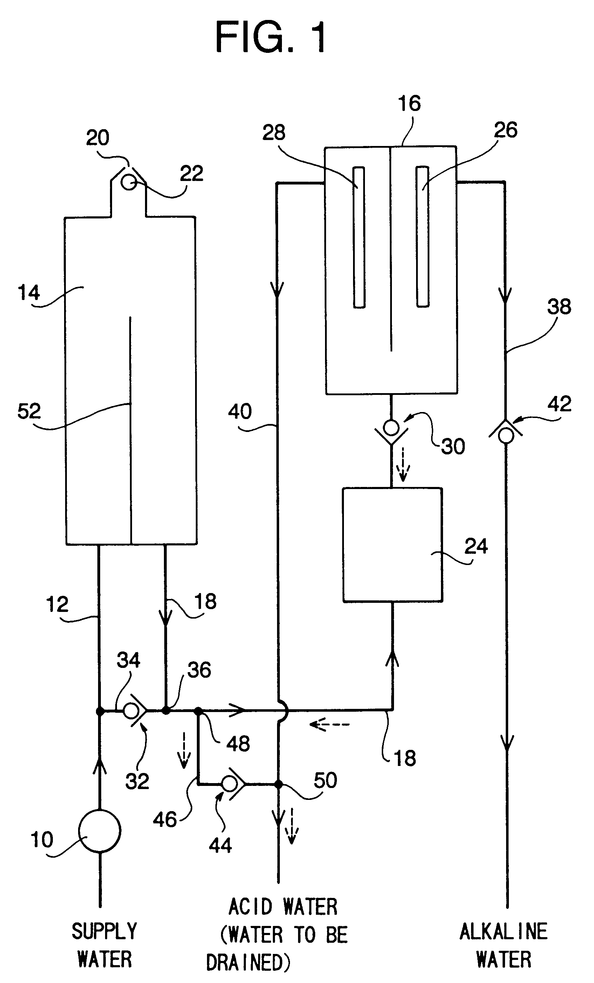

Fig. 1 is a diagrammatical view which schematically illustrates the structure of a water draining system employable for an apparatus for separately producing ion-containing waters comprising an acid water and an alkaline water by employing an electrolyzing process in accordance with the embodiment of the present invention.

The water draining system includes a water supply valve 10, a water supply passage 12 having a city water supply line or the like connected thereto, an active carbon cartridge 14 to which the water supply passage 12 is connected, and a water discharge passage 18 extending from the active carbon cartridge 14 to be connected to an electrolyzing bath 16 which will be described later. As a water is introduced into the active carbon cartridge 14 via the water supply passage 12, dust and similar impurities contained in the supplied water are removed from the active carbon cartridge 14. The water having the impurities removed therefrom is delivered to the electrolyzing bath 16 via the water discharge passage 18.

An opening portion 20 is formed at the upper end of the active carbon cartridge 14 so as to allow the opening portion 20 to be communicated with the environmental atmosphere. The opening portion 20 of the active carbon cartridge 14 is equipped with a check valve 22 which serves to close the opening portion 20 when the water is supplied to the active carbon cartridge 14 or open the opening portion 20 to introduce the environmental air into the active carbon cartridge 14 via the opening portion 20 when water supply is interrupted.

Flow rate detecting means 24 such as a flow meter, a pressure switch or the like is disposed at the intermediate location of the water discharge passage 18. When the water flows through the water discharge passage 18, the flowing of the water is detected by the flow rate detecting means 24, causing a certain voltage to be applied to electrode plates 26 and 28 in the electrolyzing bath 16 to produce ion-containing waters. In addition, a check valve 30 is arranged on the water discharge passage 18 midway between the flow rate detecting means 24 and the electrolyzing bath 16 so as to prevent a large part of water from flowing in the reverse direction from the electrolyzing bath 16 to the flow rate detecting means 24 but permit a small quantity of water to flow in the reverse direction. It should be added that arrangement of this check valve 30 may be neglected in some case.

A communication passage 34 having a check valve 32 disposed thereon is branched from the intermediate location of the water supply passage 12, and one end of the communication passage 34, i.e., the right-hand end of the same as seen in the drawing is connected to the intermediate location between the active carbon cartridge 14 and the flow rate detecting means 24. The location where the communication passage 34 and the water discharge passage 18 are connected to each other is hereinafter referred to as a first junction 36. When a differential pressure of about 200 mm Hg or more arises across the check valve 32, the communication, passage 24 is closed with the check valve 32. On the contrary, while a differential pressure of about 200 Hg or less arises across the check valve 32, the communication passage 24 is kept opened. For example, the check valve 32 is constructed such that a heavy ball rolls in the horizontal direction under the effect of a differential water pressure or a ball valve is squeezed upward against the weak resilient force of a spring so as to allow it to be opened.

An one end of an alkaline water passage 38 and an one end of an acid water passage 40 are separately connected to the upper end part of the electrolyzing bath 16 so that an alkaline water is delivered to the outside via the alkaline water passage 38 and an acid water is delivered to the outside via the acid water passage 40. The other end of the alkaline water passage 38, i.e., an outlet of the same and the other end of the acid water passage 40, i.e., an outlet of the same are located below the electrolyzing bath 16. A check valve 42 is disposed at the intermediate location of the alkali water passage 38 so as to prevent an alkaline water from flowing back into the electrolyzing bath 16 in the reverse direction.

A drain passage 46 having a check valve 44 disposed thereon is branched from the intermediate location between the first junction 36 and the flow rate detecting means 24. The drain passage 46 is connected to the intermediate location of the acid water passage 40. The location where the drain passage 46 and the water discharge passage 18 are connected to each other is hereinafter referred to as a second junction 48. In addition, the location where the drain passage 46 and the acid water passage 40 are connected to each other is hereinafter referred to as a third junction 50. When a differential pressure of about 200 mm Hg or more arises across the drain passage 46, the check valve 44 serves to close the drain passage 46 therewith. On the contrary, while a differential pressure of about 200 mm Hg or less arises across the drain passage 46, the check valve 44 is kept opened so as to allow the drain passage 46 to be communicated with the acid water passage 40 via the check valve 44. For example, the check valve 44 is likewise constructed such that a heavy ball rolls in the horizontal direction under the effect of a differential water pressure or a ball valve is squeezed upward against the weak resilient force of a spring so as to allow it to be opened.

Although illustration is neglected for the purpose of simplification, the water draining system includes a control unit for properly controlling opening/closing of the water supply valve 10 and supply of electricity to the electrode plates 26 and 28 in the electrolyzing bath 16. Next, a mode of operation of the water draining system constructed in the above-mentioned manner will be described below.

When the water supply valve 10 is opened for the purpose of supplying a water such as a city water or the like, the active carbon cartridge 14 is filled with the water which has been supplied via the water supply passage 12. As the active carbon cartridge 14 is filled with the water in that way, the check valve 22 is squeezed in the upward direction until the opening portion 20 is closed with the check valve 22. Thus, the water does not leak through the opening portion 20 of the active carbon cartridge 14 any more. At this time, the water enters the communication passage 34 from the water supply passage 12 but it does not flow to the first junction 36 via the communication passage 34 because the check valve 32 is kept closed.

After the active carbon cartridge 14 is fully filled with the water, it flows through the water discharge passage 18 to enter the electrolyzing bath 16 via the flow rate detecting means 24. When the flowing of the water is detected by the flow rate detecting means 24, a certain voltage is applied to the electrode plates 26 and 28 in the electrolyzing bath 16, causing an alkaline water and an acid water to be produced in the electrolyzing bath 16. Then, the alkaline water is taken out through the alkaline water passage 38, while the acid water is taken out through the acid water passage 40. Both of the alkaline water and acid water can be used as a drinking water. At this time, the water discharged through the water discharge passage 18 enters the drain passage 46 via the second junction 48 but it does not reach the the third junction 50 via the drain passage 46 because the check valve 44 is kept closed.

Next, when the water supply valve 10 is closed by an operator, the water pressure in the water supply passage 12 and the active carbon cartridge 14 is reduced, causing the opening portion 20 of the active carbon cartridge 14 to be opened as the check valve 22 is displaced away from the opening portion 20. As a result, the environmental air is introduced into the active carbon cartridge 14 through the opening portion 20.

The water in the water supply passage 12 and the active carbon cartridge 14 is discharged not only through the water discharge passage 18 but also through the communication passage 34, the check valve 32 and the first junction 36. In addition, since the active carbon cartridge 14 is divided into two chambers by a partition 52, there is a need of draining the water not only through the water discharge passage 18 but also from the water supply passage 18 side.

When the opening portion 20 of the active carbon cartridge 14 is opened, the water pressure in the water discharge passage 18 is reduced, causing the water pressure at the second junction 48 to become lower than the water pressure at the third junction 50. Thus, the check valve 32 is opened and the water in the water discharge passage 18 is discharged through the acid water passage 40 via the drain passage 46 and the third junction 50.

When the water supply valve 10 is closed in the above-described manner, the environmental air is introduced into the water draining system only through the active carbon cartridge 14 but not through the electrolyzing bath 16 and the associated passages. In other words, the environmental air is not introduced directly into the electrolyzing bath 16. In addition, since the opening portion 20 through which the environmental air flows in the active carbon cartridge 14 is located at the upper end of the active carbon cartridge 14, and the water supply passage 12 and the water discharge passage 18 extend downward of the lower end of the active carbon cartridge 14, there is no possibility that the environmental air enters the electrolyzing bath 18 before the water in the active carbon cartridge 14 is substantially drained therefrom.

When the water in the active carbon cartridge 14 is fully drained therefrom, the air in the active carbon cartridge 14 first flows to the first junction 36 via the water supply passage 12 and the water discharge passage 18, and thereafter, it reaches the third junction 50 via the second junction 48 and the drain passage 46. Subsequently, the air is raised up through the acid water passage 40 to enter the electrolyzing bath 16. As the air enters the electrolyzing bath 16, the water in the electrolyzing bath 16 flows toward the flow rate detecting means 24 in the reverse direction (represented by a dotted line with an arrow mark placed ahead) while its flow rate is controlled by the check valve 30. The water which has flowed in the reverse direction through the water discharge passage 18 reaches the third function 50 via the second junction 48 and the drain passage 46, and thereafter, it is discharged from the outlet of the acid water passage 40 through the latter.

While the water supply valve 10 is kept closed in the above-described manner, the water in the active carbon cartridge 14 is first drained, and thereafter, the water in the electrolyzing bath 16 starts to be drained. In other words, the water in the electrolyzing bath 16 starts to be drained after a predetermined period of time elapses. With such construction, a reverse voltage can be applied to the electrode plates 26 and 28 in the electrolyzing bath 16 after the water is reserved in the electrolyzing bath 16 within a predetermined period of time required for cleaning the electrode plates 26 and 28 in the electrolyzing bath 16.

In the aforementioned embodiment, the drain passage 46 having the check valve 44 disposed thereon is connected to the acid water passage 40. Alternatively, the drain passage 46 may be connected to the alkaline water passage 38 but not to the acid water passage 40.

As is apparent from the above description, in contrast with the conventional water draining system wherein an active carbon cartridge and an electrolyzing bath are separately opened and closed when a water in the active carbon cartridge and a water in the electrolyzing bath are drained, according to the present invention, a water in the active carbon cartridge and a water in the electrolyzing bath can automatically be drained merely by closing the water supply valve.

In addition, since the water draining system is constructed such that the water in the electrolyzing bath is drained after the water in the active carbon cartridge is drained, the water can be reserved in the electrolyzing bath within a predetermined period of time required for cleaning the electrode plates in the electrolyzing bath. With this construction, scale deposited on the electrode plates can completely be removed therefrom, and moreover, a water containing the removed scale can be drained.

While the present invention has been described above with respect to a single preferred embodiment thereof, it should of course be understood that the present invention should not be limited only to this embodiment but various changes or modifications may be made without departure from the scope of the present invention.

## Claims

1. A water draining system employable for an apparatus for separately producing ion-containing waters comprising an acid water and an alkaline water by employing a continuous type electrolyzing process, characterized in that a water containing impurities such as a city water or the like flows through a water supply passage (12), that a water supply valve (10) is disposed on said water supply passage (12), that impurity removing means (14) serves to remove impurities in the supplied water, said impurity removing means (14) having an opening portion (20) formed at the upper end part thereof so as to allow the environmental air to be introduced into said impurity removing means (14) through said opening portion (20) when said water supply valve (10) is closed thereby to reduce the pressure in said impurity removing means (14), that a water discharge passage (18) extends downward of said impurity removing means (14), that an electrolyzing bath (16) has two electrode plates (26, 28) received therein, that flow rate detecting means (24) is disposed at the intermediate location of said water discharge passage (18), that an acid water passage (40) extends downward of the upper end of said electrolyzing bath (16), that an alkaline water passage (38) extends downward of the upper end of said electrolyzing bath (16), that a drain passage (46) extends from the intermediate location of said water discharge passage (18) to reach one of said acid water passage (40) and said alkaline water passage (38), and a control unit properly controls opening/closing of said water supply valve (10) and supply of electricity to said electrolyzing bath (16).

2. A water draining system as claimed in claim 1, characterized in that said impurity removing means (14) comprises an active carbon cartridge of which interior is divided into two parts by a partition (52), one of them being a part to which said water supply passage (12) is connected at the lower end thereof and the other one being a part to which said water discharge passage (18) is connected at the lower end thereof.

3. A water draining system as claimed in claim 1, characterized in that the water draining system further includes a communication passage (34) branched from said water supply passage (12) to extend to the intermediate location of said water discharge passage (18), and that said communication passage (34) has a check valve (32) disposed thereon so as to allow the water in said impurity removing means (14) to be drained to one of said acid water passage (40) and said alkaline water passage (38) not only via said water discharge passage (18) but also via said water supply passage (18), said communication passage (34) and said check valve (32) when said water supply valve (10) is closed, causing the pressure in said impurity removing means (14) to be reduced in excess of a predetermined value by introducing the environmental air into said impurity removing means (14) via said opening portion (20).

4. A water draining system as claimed in claim 1, characterized in that said flow rate detecting means (24) comprises a flow rate meter or a pressure switch for detecting the flowing of the water through the water discharge passage (18), and that when the flowing of the water through the water discharge passage (18) is detected by said flow rate detecting means (24), said control unit is activated to apply a voltage to said electrode plates (26, 28) in said electrolyzing bath (16) thereby to produce an acid water and an alkaline water.

5. A water draining system as claimed in claim 1, characterized in that said control unit controls supply of electricity such that each of said electrode plates (26, 28) in said electrolyzing bath (16) receives a reverse voltage after a predetermined period of time required for descaling said electrode plates (26, 28) elapses after the water in said impurity removing means (14) starts to be drained.
